# EUROPÄISCHE PATENTSCHRIFT

(11) **EP 4 238 901 B1**
(45) Veröffentlichungstag und Bekanntmachung des Hinweises auf die Patenterteilung: **14.08.2024**
(21) Anmeldenummer: 22160000.0
(22) Anmeldetag: 03.03.2022
(51) Int. Cl.: B65G 1/04, B65G 1/137

(54) **VERFAHREN ZUM BETREIBEN EINER BLOCKLAGERANORDNUNG UND BLOCKANORDNUNG**
BLOCK STORAGE ARRANGEMENT AND METHOD FOR OPERATING A BLOCK STORAGE ARRANGEMENT
PROCÉDÉ DE FONCTIONNEMENT D'UN AGENCEMENT D'ENTREPOSAGE EN BLOCS ET AGENCEMENT D'ENTREPOSAGE EN BLOC

(43) Veröffentlichungstag der Anmeldung: 06.09.2023
(73) Patentinhaber: Jungheinrich Aktiengesellschaft, 22047 Hamburg (DE)
(72) Erfinder: Morawietz, Timm, 66636 Tholey-Überroth (DE); De Almeida, Carlos, 60529 Frankfurt (DE); Reising, Michael, 63073 Offenbach (DE)
(74) Vertreter: Keil & Schaafhausen Patentanwälte PartGmbB

(56) Entgegenhaltungen:
- EP-A1- 3 812 307
- WO-A1-2016/033233
- WO-A1-2021/115864
- US-A1- 2019 176 323
- US-A1- 2020 391 944
- US-B1- 10 503 143

## Beschreibung

Die vorliegende Erfindung betrifft ein Verfahren zum Betreiben einer Blocklageranordnung, die mehrere Behälterstapelräume, einen unterhalb der Behälterstapelräume angeordneten Beschickungsraum, eine Steuereinrichtung und mindestens ein im Beschickungsraum verfahrbares Beschickungsfahrzeug aufweist, wobei das Beschickungsfahrzeug einen Fahrantrieb, mit dem das Beschickungsfahrzeug unterhalb eines von der Steuereinrichtung vorgewählten Behälterstapelraums positionierbar ist, und einen Hubantrieb aufweist, mit dem ein Behälter von unten in den Behälterstapelraum einlagerbar oder nach unten aus dem Behälterstapelraum entnehmbar ist.

Weiterhin betrifft die Erfindung eine Blocklageranordnung mit mehreren Behälterstapelräumen, einem unterhalb der Behälterstapelräume angeordneten Beschickungsraum, durch den die Behälterstapelräume zugänglich sind, eine Steuereinrichtung und mindestens einem Beschickungsfahrzeug, wobei das Beschickungsfahrzeug einen Fahrantrieb, mit dem das Beschickungsfahrzeug unterhalb eines von der Steuereinrichtung vorgewählten Behälterstapelraums positionierbar ist, und einen Hubantrieb aufweist, mit dem ein Behälter von unten in den Behälterstapelraum einlagerbar oder nach unten aus dem Behälterstapelraum entnehmbar ist.

Ein derartiges Verfahren und eine derartige Blocklageranordnung sind aus EP 3 812 307 A1 bekannt.

WO 2016/033233 A1 beschreibt eine Sicherheitskonformität für mobile Antriebseinheiten.

Eine Blocklageranordnung zeichnet sich dadurch aus, dass man den zur Verfügung stehenden Raum relativ gut ausnutzen kann, um eine Vielzahl von einzulagernden Waren unterzubringen. Die entsprechenden Waren werden hierbei in Behältern angeordnet. Die Behälter werden wiederum gestapelt, und zwar in den Behälterstapelräumen, die nebeneinander angeordnet sein können. Das Einlagern eines Behälters in einem Behälterstapelraum erfolgt von unten durch den Beschickungsraum, und zwar mit Hilfe des Beschickungsfahrzeugs. Die Entnahme eines Behälters aus einem Behälterstapelraum erfolgt ebenfalls nach unten mit Hilfe des Beschickungsfahrzeugs, das den Behälter aus dem Behälterstapelraum in den Beschickungsraum absenkt und dann aus dem Beschickungsraum herausfahren kann.

Eine derartige Blocklageranordnung arbeitet normalerweise weitgehend störungsfrei. Sollte jedoch eine Störung auftreten, dann muss eine Wartungsperson Zutritt zu der Blocklageranordnung haben, um die Störung zu beheben. Die Störung kann beispielsweise darin liegen, dass sich ein Behälter verklemmt oder verkantet hat. In diesem Fall muss der Behälter manuell wieder richtig ausgerichtet werden.

In der Blocklageranordnung, genauer gesagt im Beschickungsraum, befindet sich jedoch das mindestens eine Beschickungsfahrzeug, das eine Gefahrenquelle für die Wartungsperson bildet.

Der Erfindung liegt die Aufgabe zugrunde, eine Blocklageranordnung mit geringem Aufwand sicher zu betreiben.

Diese Aufgabe wird bei einer Blocklageranordnung der eingangs genannten Art dadurch gelöst, dass man die Blocklageranordnung vor einem Zutritt einer Wartungsperson in einen sicheren Zustand versetzt, indem man den Hubantrieb des Beschickungsfahrzeugs deaktiviert.

Wenn das Beschickungsfahrzeug inaktiviert ist, kann sich der Hubantrieb nicht mehr bewegen. Es besteht also keine Gefahr, dass die Wartungsperson bei einer Betätigung des Hubantriebs zwischen einem Behälter oder einer Behälteraufstandsfläche und einem zwischen dem Beschickungsraum und den Behälterstapelräumen angeordneten Rahmen oder dem Fußboden eingeklemmt wird. Das Risiko, das von dem Beschickungsfahrzeug ausgeht, wird also ganz erheblich vermindert. Da man die Blocklageranordnung vor dem Zutritt der Wartungsperson in einen sicheren Zustand versetzt, kann die Blocklageranordnung in dem sicheren Zustand gehalten werden, solange sich die Wartungsperson in der Blocklageranordnung befindet.

Es ist von Vorteil, wenn man beim Inaktivieren des Beschickungsfahrzeugs den Hubantrieb des Beschickungsfahrzeugs in eine in Schwerkraftrichtung unterste Position verstellt und den Hubantrieb danach stillsetzt. Eine Gefährdung der Wartungsperson, die sich durch einen absinkenden Hubantrieb ergeben könnte, wird damit praktisch auch ausgeschlossen.

Vorzugsweise inaktiviert man das Beschickungsfahrzeug an der Position, an der es sich befindet. Dies spart Zeit. Man muss nicht mehr abwarten, bis das Beschickungsfahrzeug eine vorbestimmte Position erreicht hat, bevor es inaktiviert werden kann. Die Inaktivierung kann vielmehr ohne Zeitverzögerung folgen.

Vorzugsweise deaktiviert man beim Inaktivieren des Beschickungsfahrzeugs den Fahrantrieb des Beschickungsfahrzeugs. Wenn der Fahrantrieb deaktiviert ist, kann sich das Beschickungsfahrzeug nicht mehr im Beschickungsraum bewegen und bildet dann praktisch keine Gefahrenquelle mehr für die Wartungsperson.

Vorzugsweise verhindert man den Zutritt der Wartungsperson durch eine Tür, die geschlossen ist, wobei zum Öffnen der Tür ein Freigabesignal erzeugt werden muss. Dieses Freigabesignal wird erst dann erzeugt, wenn die Blocklageranordnung in einen sicheren Zustand versetzt worden ist.

Vorzugsweise muss die Wartungsperson zum Erzeugen des Freigabesignals wird ein Anforderungssignal an die Blocklageranordnung senden und das Freigabesignal erst eine vorbestimmte Zeitdauer nach Erzeugung eines Anforderungssignals erzeugt, wobei die vorbestimmte Zeitdauer länger ist als eine Zeit, die das Beschickungsfahrzeug zum Inaktivieren benötigt und das Beschickungsfahrzeug das Anforderungssignal erkennt. Bei dieser Ausgestaltung muss die Wartungsperson oder eine andere mit der Wartungsperson zusammenarbeitende Person das Anforderungssignal erzeugen. Die Blocklageranordnung "weiß" dann, dass ein Zutritt einer Wartungsperson gewünscht ist. Die Steuereinrichtung erzeugt aber noch nicht das Freigabesignal, um die Tür zu öffnen, sondern wartet erst die vorbestimmte Zeitdauer ab, so dass sich vor dem Öffnen der Tür das Beschickungsfahrzeug tatsächlich in einem inaktivierten Zustand befindet. Da das Beschickungsfahrzeug das Anforderungssignal erkennt, steht ihm die notwendige Information zur Verfügung, um eine Abfolge von Schritten auszulösen, mit denen es in den inaktiven Zustand versetzt wird. Die Inaktivierung des Beschickungsfahrzeugs kann also autark im Innern der Blocklageranordnung erfolgen. Ein Eingriff der Steuereinrichtung, der über ein Erkennen des Anforderungssignals durch das Beschickungsfahrzeug hinausgeht, ist nicht erforderlich.

Vorzugsweise übermittelt man fortlaufend ein Signal von der Steuereinrichtung an das Beschickungsfahrzeug und das Beschickungsfahrzeug erkennt das Anforderungssignal, wenn es in einem vorbestimmten Zeitraum weniger als eine vorbestimmte Anzahl von Signalen empfängt. Damit ist es möglich, die Signale drahtlos, also beispielsweise über Funk oder über WLAN, zu übermitteln, auch wenn es in der Blocklageranordnung nicht immer möglich ist, eine stets störungsfreie Übertragung der Signale zu gewährleisten. In einer Blocklageranordnung sind üblicherweise mehrere Stützen vorhanden, die eine Abschirmung von drahtlos übermittelten Signalen bewirken können. Auch können sich im Beschickungsraum mehrere Beschickungsfahrzeuge gleichzeitig bewegen, die dann eine gegenseitige Abschirmung bewirken können, so dass nicht jedes Signal jedes Beschickungsfahrzeug erreicht. Der Ausfall eines einzigen Signals ist allerdings noch kein Zeichen für das Beschickungsfahrzeug, das ein Anforderungssignal vorliegt. Vielmehr erkennt das Beschickungsfahrzeug ein Anforderungssignal nur dann, wenn es in einem vorbestimmten Zeitraum weniger als eine vorbestimmte Anzahl von Signalen empfängt. Beispielsweise kann man in einem Zeitraum von einer Sekunde 1000 Signale übermitteln. Wenn das Beschickungsfahrzeug weniger als 500 Signale in der Sekunde empfängt, dann erkennt es den Anforderungszustand. Diese Zahlen sind allerdings als Beispiel zu verstehen.

Vorzugsweise ist das Signal ein Kontrollsignal, das man zusätzlich zu mindestens einem Steuersignal von der Steuereinrichtung an das Beschickungsfahrzeug übermittelt. Das Kontrollsignal kann vom Beschickungsfahrzeug dann getrennt erfasst werden, was eine erhöhte Sicherheit ergibt.

Die Aufgabe wird bei einer Blocklageranordnung der eingangs genannten Art dadurch gelöst, dass die Steuereinrichtung mit einer Anforderungseinrichtung verbunden ist, mit der eine Wartungsperson einen Zutrittswunsch anzeigen kann, und die Steuereinrichtung nach Betätigung der Anforderungseinrichtung und vor dem Zutritt der Wartungsperson die Blocklageranordnung in einen sicheren Zustand versetzt, bei dem der Hubantrieb des Beschickungsfahrzeugs inaktiviert ist. Ein inaktiviertes Beschickungsfahrzeug ist für die Wartungsperson dann keine Gefahrenquelle mehr. Da das Inaktivieren erfolgt, bevor die Wartungsperson die Blocklageranordnung betritt, sind Zustände definiert, die sicher oder unsicher sind. In einem sicheren Zustand der Blocklageranordnung kann die Wartungsperson die Blocklageranordnung betreten. Das Betreten kann beispielsweise dadurch erlaubt werden, dass die Blocklageranordnung eine Tür aufweist, durch die die Wartungsperson in die Blocklageranordnung eintreten kann, wobei die Tür geschlossen ist und erst geöffnet wird, wenn das Beschickungsfahrzeug inaktiviert ist.

Vorzugsweise sendet die Steuereinrichtung fortlaufend Signale an das Beschickungsfahrzeug und das Beschickungsfahrzeug erkennt ein Anforderungssignal, wenn es in einem vorbestimmten Zeitraum nicht eine vorbestimmte Anzahl von Signalen empfängt, wobei das Beschickungsfahrzeug nach Erkennen des Anforderungssignals in einen inaktiven Zustand wechselt. Bei dieser Ausgestaltung kann man die Signale drahtlos, also per Funk oder per WLan, von der Steuereinrichtung an das Beschickungsfahrzeug übertragen. In einer Blocklageranordnung besteht allerdings die Gefahr, dass nicht jedes Signal das Beschickungsfahrzeug erreicht, weil Elemente der Blocklageranordnung, beispielsweise Ständer oder dergleichen, die Signale abschatten können. Ein weiteres Problem besteht darin, dass in dem Beschickungsraum mehrere Beschickungsfahrzeuge vorhanden sein können, die sich relativ zueinander bewegen und damit von Zeit zu Zeit dafür sorgen können, dass ein Signal von der Steuereinrichtung das jeweilige Beschickungsfahrzeug nicht erreicht. Um dieses Problem zu entschärfen, sendet die Steuereinrichtung fortlaufend Signale aus. Erst dann, wenn das Beschickungsfahrzeug in einem vorbestimmten Zeitraum weniger als eine vorbestimmte Anzahl von Signalen empfängt, erkennt das Beschickungsfahrzeug das Anforderungssignal. Wenn im ungestörten Betrieb die Steuereinrichtung beispielsweise 1000 Signale pro Sekunde an das Beschickungsfahrzeug sendet, dann erkennt das Beschickungsfahrzeug ein Anforderungssignal, wenn es in der Sekunde nicht mehr als 500 Signale erkennt. Das Ausbleiben eines oder einiger weniger Signale führt also nicht zum Erkennen eines Anforderungssignals und damit zum Inaktivieren des Beschickungsfahrzeugs. Die Signale können beispielsweise Impulsfolgen sein, die für jedes Beschickungsfahrzeug einen bestimmten Code darstellen. Man kann die Steuereinrichtung so ausgestalten, dass die Signale Kontrollsignale bilden und die Steuereinrichtung zusätzlich Steuersignale aussendet, die im aktivierten Zustand des jeweiligen Beschickungsfahrzeugs das Beschickungsfahrzeug steuern, also dem Beschickungsfahrzeug eine Position angeben, zu der es fahren soll, und eine Weisung, ob es einen Behälter einlagern oder abholen soll.

Vorzugsweise weist das Beschickungsfahrzeug einen ersten Zeitgeber auf, der ein erstes Zeitintervall steuert, nachdem das Beschickungsfahrzeug in den inaktiven Zustand wechselt, und die Steuereinrichtung weist einen zweiten Zeitgeber auf, der ein zweites Zeitintervall steuert, nachdem die Steuereinrichtung das Freigabesignal erzeugt, wobei das zweite Zeitintervall größer als das erste Zeitintervall ist. Beide Zeitintervalle beginnen mit der Erzeugung bzw. dem Empfang des Anforderungssignals. Das erste Zeitintervall kann auch noch eine Zeit umfassen, in der das Beschickungsfahrzeug bestimmte Operationen ausführt. Wenn das Beschickungsfahrzeug beispielsweise einen Behälter angehoben hat, um ihn aus einem Behälterstapelraum zu entnehmen, dann muss das Beschickungsfahrzeug eine Halteeinrichtung, die die übrigen Behälter eines in dem Behälterstapelraum befindlichen Behälterstapel hält, solange offenhalten, bis der unterste Behälter entnommen worden ist. Erst danach kann das Beschickungsfahrzeug in den inaktiven Zustand wechseln. Ein derartiger Zeitanteil ist aber vorher bestimmbar und kann bei der Bestimmung des ersten Zeitintervalls berücksichtigt werden.

Vorzugsweise inaktiviert sich das Beschickungsfahrzeug nach Erkennen des Anforderungssignals selbst. Nachdem das Beschickungsfahrzeug das Anforderungssignal erkannt hat, ist also eine Signalverbindung mit der Steuereinrichtung nicht mehr erforderlich. Das Beschickungsfahrzeug kann vielmehr alle Schritte selbsttätig unternehmen, die zu seiner Inaktivierung erforderlich sind.

Es ist von Vorteil, dass außerhalb des Beschickungsraums ein Wartungsraum angeordnet ist und das Beschickungsfahrzeug nach Empfang des Anforderungssignals in den Wartungsraum fährt. Das Beschickungsfahrzeug muss also nach Erhalt des Anforderungssignals nicht unmittelbar stillgesetzt werden. Vielmehr kann es eine Aufgabe, die es gerade ausführt, noch beenden und sich dann in einem vom Beschickungsraum getrennten Wartungsraum bewegen, so dass der Beschickungsraum frei von Beschickungsfahrzeugen ist und die Wartungsperson den Zugriff auf den gesamten Beschickungsraum hat.

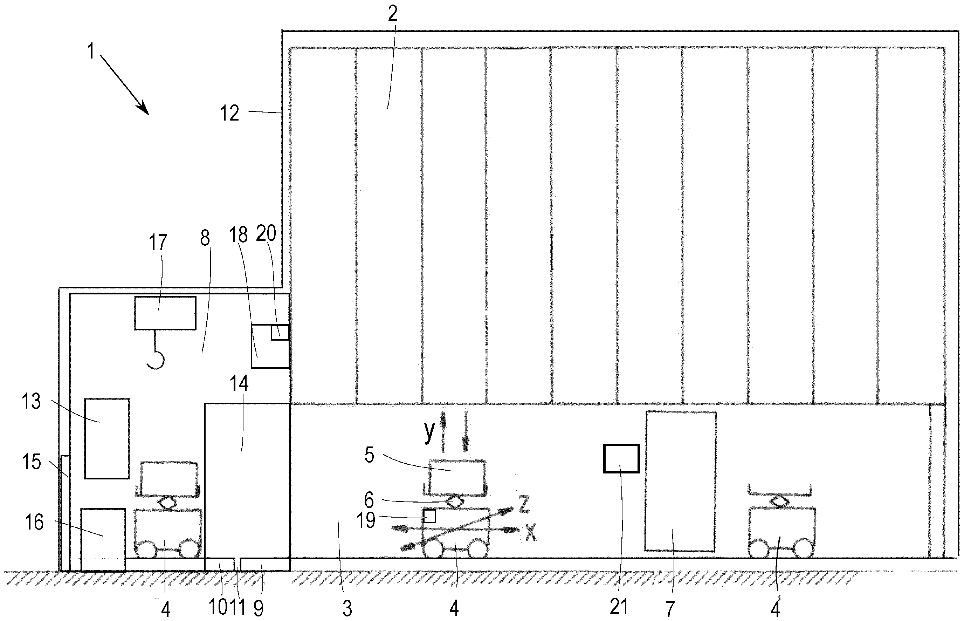

Die Erfindung wird im Folgenden anhand eines bevorzugten Ausführungsbeispiels in Verbindung mit der Zeichnung beschrieben. Hierin zeigt:
- die einz. Fig.: eine stark schematisierte Darstellung einer Blocklageranordnung.

Eine Blocklageranordnung 1 weist mehrere Behälterstapelräume 2 auf, die in Form einer Reihe (in X-Richtung) nebeneinander angeordnet sind. Mehrere Reihen derartiger Behälterstapelräume 2 können (in der Darstellung der Fig. senkrecht zur Zeichenebene in Z-Richtung) hintereinander angeordnet sein. Jeder Behälterstapelraum 2 kann einen Behälterstapel aufnehmen. Unterhalb der Behälterstapelräume 2 ist ein Beschickungsraum 3 angeordnet. Im Beschickungsraum 3 ist ein Beschickungsfahrzeug 4 verfahrbar. Das Beschickungsfahrzeug 4 dient dazu, einen Behälter 5 in einem Behälterstapelraum 2 einzulagern oder einen Behälter 5 aus einem Behälterstapelraum zu entnehmen. Hierzu weist das Beschickungsfahrzeug 4 einen Hubantrieb 6 auf, mit dem der Behälter in Richtung der Pfeile Y, also in Schwerkraftrichtung, bewegt werden kann.

Der Beschickungsraum 3 ist für eine Wartungsperson durch eine Tür 7 zugänglich, wobei die Tür 7 verriegelt ist und diese Verriegelung nur auf eine Weise gelöst werden kann, die weiter unten beschrieben werden kann.

Das Beschickungsfahrzeug 4 ist in die Richtung X verfahrbar, die der Längserstreckung der Reihe der Behälterstapelräume 2 entspricht. Außerdem ist es in die Richtung Z verfahrbar, die senkrecht dazu gerichtet ist.

Neben dem Beschickungsraum 3 ist ein Wartungsraum 8 angeordnet. Das Beschickungsfahrzeug 4 kann in den Wartungsraum 8 über eine Schienenanordnung gefahren werden, die erste Schienen 9 aufweist, die sich auch in den Beschickungsraum 3 erstrecken, und zweite Schienen 10, die sich nur im Wartungsraum 8 befinden. Die Schienen 9, 10 sind hier mit einer Lücke 11 zueinander dargestellt. Es ist aber auch möglich, dass die Schienen 9 und 10 nahtlos ineinander übergehen.

Die Blocklageranordnung 1 weist eine Hülle 12 auf, die sowohl die Behälterstapelräume 2 und den Beschickungsraum 3 als auch den Wartungsraum 8 umgeben. Die Hülle 12 kann dazu verwendet werden, zumindest in den Behälterstapelräumen 2 und dem Beschickungsraum 3 eine Atmosphäre mit einem verminderten Sauerstoffgehalt aufrechtzuhalten, so dass eine Brandgefahr kleingehalten wird.

Die Hülle 12 weist im Wartungsraum 8 ein Fenster 13 auf. Durch das Fenster 13 kann eine Wartungsperson in den Wartungsraum 8 hineinblicken, um ein dort befindliches Beschickungsfahrzeug 4 zumindest optisch zu inspizieren. Die Atmosphäre von Wartungsraum 8 einerseits und den Behälterstapelräumen 2 und dem Beschickungsraum 3 andererseits kann durch eine Schleusenanordnung 14 getrennt voneinander gehalten werden, was gelegentlich von Vorteil ist, wenn im Wartungsraum 8 Wartungsarbeiten durch eine Bedienungsperson vorgenommen werden sollen.

Der Wartungsraum 8 selbst ist durch eine Tür 15 zugänglich, der wie auch die Tür 7 im Beschickungsraum 3, nur unter bestimmten Bedingungen geöffnet werden kann. Im Wartungsraum 8 kann ferner eine Ladestation 16 für das Beschickungsfahrzeug 4 vorgesehen sein, das einen Akkumulator oder eine elektrisch aufladbare Batterie aufweist, um die Bewegungen im Beschickungsraum durchführen zu können. Weiterhin ist im Wartungsraum 8 eine Hebeeinrichtung 17 angeordnet, die beispielsweise als Laufkatze oder als Kran ausgebildet sein kann.

Die Blocklageranordnung 1 weist eine Steuereinrichtung 18 auf, die das Beschickungsfahrzeug 4 oder die Beschickungsfahrzeuge 4 steuert. Die Steuereinrichtung 18 steht drahtlos mit den Beschickungsfahrzeugen 4 in Verbindung. Wenn eine Wartungsperson den Beschickungsraum 3 betreten möchte, weil beispielsweise eine Reparatur oder eine Instandsetzung erforderlich ist, ist dies nicht ohne weiteres möglich, weil von den im Beschickungsraum 3 befindlichen Fahrzeugen eine gewisse Gefahr ausgeht.

Um diese Gefahr zu minimieren, muss die Bedienungsperson zunächst ein Anforderungssignal erzeugen, das an die Steuereinrichtung 18 übermittelt wird. Das Anforderungssignal kann beispielsweise durch einen Schalter oder Taster erzeugt werden, der außen an der Hülle 12 befestigt ist (nicht dargestellt). Das Anforderungssignal kann aber auch drahtlos über eine Fernsteuereinheit oder über ein Mobiltelefon an die Steuereinrichtung 18 übermittelt werden. Sobald die Steuereinrichtung 18 ein entsprechendes Anforderungssignal erhalten hat, informiert sie die Beschickungsfahrzeuge 4 darüber.

Die Übermittlung des Anforderungssignals an die Beschickungsfahrzeuge 4 kann beispielsweise dadurch erfolgen, dass die Steuereinrichtung 18 fortlaufend ein Signal an jedes Beschickungsfahrzeug 4 übermittelt und das Beschickungsfahrzeug 4 das Anforderungssignal erkennt, wenn es in einem vorbestimmten Zeitraum weniger als eine vorbestimmte Anzahl von Signalen empfängt.

Die Signale können unterschiedliche Formen aufweisen. Man kann beispielsweise so vorgehen, dass die Steuereinrichtung 18 Steuersignale an die Beschickungsfahrzeuge 4 sendet, die das Beschickungsfahrzeug 4 anweisen, bestimmte Handlungen oder Tätigkeiten vorzunehmen. Ein Beispiel hierfür ist, dass das Beschickungsfahrzeug 4 unter einen bestimmten Behälterstapelraum 2 fährt und in dieser Position einen Behälter 5 anhebt, bis er in den Behälterstapelraum 2 eingeführt worden ist und dort von einer nicht näher dargestellten Halteeinrichtung festgehalten wird. Ein anderes Vorgehen besteht darin, dass das Beschickungsfahrzeug 4 wiederum unter einen Behälterstapelraum 2 gefahren wird und die Hubeinrichtung 6 betätigt wird, um einen im Behälterstapelraum 2 befindlichen Behälter anzuheben, bis er von einer Halteeinrichtung freikommt. Das Beschickungsfahrzeug 4 kann dann die Halteeinrichtung lösen und den Behälter 5 absenken, so dass er sich vollständig im Beschickungsraum 3 befindet und dort verfahren werden kann.

Zusätzlich kann die Steuereinrichtung 18 auch noch ein Kontrollsignal senden. In diesem Fall würde das Beschickungsfahrzeug 4 das Kontrollsignal getrennt auswerten. Wenn das Beschickungsfahrzeug 4 dem Kontrollsignal entnimmt, dass ein Anforderungssignal erzeugt worden ist, kann es eine nachfolgend beschriebene Sicherungssequenz einleiten.

Das Beschickungsfahrzeug 4 kann diese Sequenz auch dann einleiten, wenn es in einer vorbestimmten Zeit weniger als eine vorbestimmte Anzahl von Signalen empfängt. Dies gilt sowohl für das oben erwähnte Kontrollsignal als auch für die Steuersignale. Wenn beispielsweise die Steuereinrichtung 18 1000 Signale pro Sekunde an das Beschickungsfahrzeug 4 sendet, dann nimmt das Beschickungsfahrzeug 4 an, dass ein Anforderungssignal erzeugt worden ist, wenn es weniger als 500 Signale pro Sekunde erhält. Hiermit trägt man der Tatsache Rechnung, dass in der Stapellageranordnung Bereiche existieren, in denen eine drahtlose Verbindung zwischen der Steuereinrichtung 18 und dem Beschickungsfahrzeug 4 nicht immer gewährleistet ist.

Wenn das Beschickungsfahrzeug 4 erkennt, dass ein Anforderungssignal erzeugt worden ist, dann leitet es die oben erwähnte Inaktivierungssequenz ein. Dies muss allerdings nicht unmittelbar nach Erkennen des Anforderungssignals erfolgen, sondern kann auch beinhalten, dass das Beschickungsfahrzeug 4 einen einmal begonnenen Auftrag zu Ende führt. Die Steuereinrichtung 8 "weiß", welchen Auftrag sie dem jeweiligen Beschickungsfahrzeug 4 erteilt hat und "weiß" dementsprechend auch, welcher Zeitraum für diesen Auftrag erforderlich ist.

Nach Abschluss dieses Auftrags (oder ggfs. auch früher) inaktiviert das Beschickungsfahrzeug 4 den Hubantrieb 6. Insbesondere verstellt das Beschickungsfahrzeug 4 den Hubantrieb 6 in die in Schwerkraftrichtung unterste Position und setzt den Hubantrieb 6 dann still. Damit wird das Risiko kleingehalten, dass eine Wartungsperson in Y-Richtung vom Hubantrieb 6 oder von einem auf dem Hubantrieb 6 befindlichen Behälter 5 eingequetscht oder auf andere Weise beschädigt wird.

Die Zeit, die das Beschickungsfahrzeug zum Inaktivieren benötigt, kann von Fall zu Fall unterschiedlich sein. Sie hängt u.a. davon ab, ob das Beschickungsfahrzeug 4 einen Auftrag noch zu Ende führen muss oder nicht. Dies ist der Steuereinrichtung 18 aber bekannt, die daraufhin die zum Inaktivieren benötigte Zeit ermitteln kann.

Das Beschickungsfahrzeug 4 weist einen ersten Zeitgeber 19 auf, der ein erstes Zeitintervall steuert. Nach dem ersten Zeitintervall steuert das Beschickungsfahrzeug 4 in den inaktiven Zustand. Die Steuereinrichtung 18 weist einen zweiten Zeitgeber 20 auf, der ein zweites Zeitintervall steuert. Nach dem zweiten Zeitintervall erzeugt die Steuereinrichtung 18 das Freigabesignal. Das zweite Zeitintervall ist größer als das erste Zeitintervall.

Eine Anforderungseinrichtung 21 ist schematisch neben der Tür 7 dargestellt. Die Anforderungseinrichtung 21 befindet sich an der Außenseite der Hülle 12, auf jeden Fall außerhalb des Beschickungsraums 3. Eine entsprechende Anforderungseinrichtung 21 kann auch neben der Tür 15 vorgesehen sein.

Darüber hinaus kann das Beschickungsfahrzeug 4 seinen Fahrantrieb deaktivieren. Dies erfolgt zweckmäßigerweise erst dann, wenn das Beschickungsfahrzeug 4 in den Wartungsbereich 8 gefahren worden ist. Wenn alle Beschickungsfahrzeuge 4 in den Wartungsbereich 8 gefahren worden sind, ist der Beschickungsraum 3 leer und kann von einer Wartungsperson ohne weiteres betreten werden.

Zum Betreten erzeugt die Steuereinrichtung 18 ein Freigabesignal, das bewirkt, dass die Tür 7 und/oder die Tür 15 geöffnet wird. Das Freigabesignal wird allerdings nicht unmittelbar nach Erzeugen eines Anforderungssignals erzeugt, sondern erst eine vorbestimmte Zeitdauer später. Diese vorbestimmte Zeitdauer ist länger als eine Zeit, die das Beschickungsfahrzeug zum Inaktivieren benötigt. Eine weitere Voraussetzung ist, dass das Beschickungsfahrzeug das Anforderungssignal erkennt, was das Beschickungsfahrzeug wiederum der Steuereinrichtung 18 signalisieren muss.

Erst wenn diese Bedingungen alle erfüllt sind, kann die Wartungsperson in den Beschickungsraum 3 eintreten und dort die notwendigen Maßnahmen durchführen.

Das Beschickungsfahrzeug 4 inaktiviert sich nach Erkennen des Anforderungssignals 6, d.h. die zum Inaktivieren erforderlichen Schritte sind in einer im Beschickungsfahrzeug 4 vorgesehenen Steuerung (nicht dargestellt) bereits gespeichert. Das Beschickungsfahrzeug 4 benötigt also zum Inaktivieren lediglich das Erkennen des Anforderungssignals. Weitere Signale, die es von der Steuereinrichtung 18 empfangen müsste, sind zum Inaktivieren nicht erforderlich.

## Patentansprüche

1. Verfahren zum Betreiben einer Blocklageranordnung (1), die mehrere Behälterstapelräume (2), einen unterhalb der Behälterstapelräume (2) angeordneten Beschickungsraum (3), eine Steuereinrichtung (18) und mindestens ein im Beschickungsraum (3) verfahrbares Beschickungsfahrzeug (4) aufweist, wobei das Beschickungsfahrzeug (4) einen Fahrantrieb, mit dem das Beschickungsfahrzeug unterhalb eines von der Steuereinrichtung (18) vorgewählten Behälterstapelraums (2) positionierbar ist, und einen Hubantrieb (6) aufweist, mit dem ein Behälter (5) von unten in den Behälterstapelraum (2) einlagerbar oder nach unten aus dem Behälterstapelraum (2) entnehmbar ist, **dadurch gekennzeichnet, dass** man die Blocklageranordnung (1) vor einem Zutritt einer Wartungsperson in einen sicheren Zustand versetzt, indem man den Hubantrieb (6) des Beschickungsfahrzeugs (4) inaktiviert.

2. Verfahren nach Anspruch 1, **dadurch gekennzeichnet, dass** man beim Inaktivieren des Beschickungsfahrzeugs (4) den Hubantrieb (6) des Beschickungsfahrzeugs (4) in eine in Schwerkraftrichtung unterste Position verstellt und den Hubantrieb (6) danach stillsetzt.

3. Verfahren nach Anspruch 1 oder 2, **dadurch gekennzeichnet, dass** man das Beschickungsfahrzeug (4) an der Position inaktiviert, an der es sich befindet.

4. Verfahren nach Anspruch 3, **dadurch gekennzeichnet, dass** man beim Inaktivieren des Beschickungsfahrzeugs (4) den Fahrantrieb des Beschickungsfahrzeugs (4) deaktiviert.

5. Verfahren nach einem der Ansprüche 1 bis 4, **dadurch gekennzeichnet, dass** man den Zutritt der Wartungsperson durch eine Tür (7, 15) verhindert, die geschlossen ist, wobei zum Öffnen der Tür (7, 15) ein Freigabesignal erzeugt werden muss.

6. Verfahren nach Anspruch 5, **dadurch gekennzeichnet, dass** die Wartungsperson zum Erzeugen des Freigabesignals ein Anforderungssignal an die Blocklageranordnung (1) senden muss und das Freigabesignal erst eine vorbestimmte Zeitdauer nach Erzeugung des Anforderungssignals erzeugt wird, wobei die vorbestimmte Zeitdauer länger ist als eine Zeit, die das Beschickungsfahrzeug (4) zum Inaktivieren benötigt und das Beschickungsfahrzeug (4) das Anforderungssignal erkennt.

7. Verfahren nach Anspruch 6, **dadurch gekennzeichnet, dass** man fortlaufend ein Signal von der Steuereinrichtung (18) an das Beschickungsfahrzeug (4) übermittelt und das Beschickungsfahrzeug (4) das Anforderungssignal erkennt, wenn es in einem vorbestimmten Zeitraum weniger als eine vorbestimmte Anzahl von Signalen empfängt.

8. Verfahren nach Anspruch 6 oder 7, **dadurch gekennzeichnet, dass** das Signal ein Kontrollsignal ist, das man zusätzlich zu mindestens einem Steuersignal von der Steuereinrichtung (18) an das Beschickungsfahrzeug (4) übermittelt.

9. Blocklageranordnung mit mehreren Behälterstapelräumen (2), einem unterhalb der Behälterstapelräume (2) angeordneten Beschickungsraum (3), durch den die Behälterstapelräume zugänglich sind, einer Steuereinrichtung (18) und mindestens einem Beschickungsfahrzeug (4), wobei das Beschickungsfahrzeug (4) einen Fahrantrieb, mit dem das Beschickungsfahrzeug (4) unterhalb eines von der Steuereinrichtung (18) vorgewählten Behälterstapelraums (2) positionierbar ist, und einen Hubantrieb (6) aufweist, mit dem ein Behälter (5) von unten in den Behälterstapelraum (2) einlagerbar oder nach unten aus dem Behälterstapelraum (2) entnehmbar ist, **dadurch gekennzeichnet, dass** die Steuereinrichtung (18) mit einer Anforderungseinrichtung (21) verbunden ist, mit der eine Wartungsperson einen Zutrittswunsch anzeigen kann, und die Steuereinrichtung (18) nach Betätigung der Anforderungseinrichtung (21) und vor dem Zutritt der Wartungsperson die Blocklageranordnung (1) in einen sicheren Zustand versetzt, bei dem der Hubantrieb (6) des Beschickungsfahrzeugs (4) inaktiviert ist.

10. Blocklageranordnung nach Anspruch 9, **dadurch gekennzeichnet, dass** die Steuereinrichtung (18) fortlaufend Signale an das Beschickungsfahrzeug (4) sendet und das Beschickungsfahrzeug (4) ein Anforderungssignal erkennt, wenn es in einem vorbestimmten Zeitraum nicht eine vorbestimmte Anzahl von Signalen empfängt, wobei das Beschickungsfahrzeug (4) nach Erkennen des Anforderungssignals in einen inaktiven Zustand wechselt.

11. Blocklageranordnung nach Anspruch 10, **dadurch gekennzeichnet, dass** das Beschickungsfahrzeug (4) einen ersten Zeitgeber (19) aufweist, der ein erstes Zeitintervall steuert, nach dem das Beschickungsfahrzeug (4) in den inaktiven Zustand wechselt, und die Steuereinrichtung (18) einen zweiten Zeitgeber (20) aufweist, der ein zweites Zeitintervall steuert, nach dem die Steuereinrichtung (18) das Freigabesignal erzeugt, wobei das zweite Zeitintervall größer als das erste Zeitintervall ist.

12. Blocklageranordnung nach Anspruch 10 oder 11, **dadurch gekennzeichnet, dass** das sich das Beschickungsfahrzeug nach Erkennen des Anforderungssignals selbst inaktiviert.

13. Blocklageranordnung nach einem der Ansprüche 10 bis 12, **dadurch gekennzeichnet, dass** außerhalb des Beschickungsraums ein Wartungsraum angeordnet ist und das Beschickungsfahrzeug nach Empfang des Anforderungssignals in den Wartungsraum fährt.

## Claims

1. A method for operating a block storage arrangement (1) that has multiple container stacking chambers (2), a loading chamber (3) arranged below the container stacking chambers (2), a control device (18) and at least one loading vehicle (4) that can be moved in the loading chamber (3), wherein the loading vehicle (4) has a travel drive, by means of which the loading vehicle can be positioned below a container stacking chamber (2) preselected by the control device (18), and a lifting drive (6), by means of which a container (5) can be stored in the container stacking chamber (2) from below or can be removed downwards from the container stacking chamber (2), **characterized in that** the block storage arrangement (1) is put into a secure state prior to access by a maintenance person by inactivating the lifting drive (6) of the loading vehicle (4).

2. The method according to claim 1, **characterized in that**, when the loading vehicle (4) is inactivated, the lifting drive (6) of the loading vehicle (4) is moved to a lowermost position in the direction of gravity, and the lifting drive (6) is then stopped.

3. The method according to claim 1 or 2, **characterized in that** the loading vehicle (4) is inactivated at the position where it is located.

4. The method according to claim 3, **characterized in that** the travel drive of the loading vehicle (4) is deactivated when the loading vehicle (4) is inactivated.

5. The method according to any of the claims 1 to 4, **characterized in that** the access of the maintenance person is prevented by a door (7, 15) that is closed, wherein an enable signal must be generated to open the door (7, 15).

6. The method according to claim 5, **characterized in that** the maintenance person must send a request signal to the block storage arrangement (1) to generate the enable signal, and the enable signal is not generated until a predetermined period of time after the request signal is generated, wherein the predetermined period of time is longer than the time required for the loading vehicle (4) to inactivate and for the loading vehicle (4) to detect the request signal.

7. The method according to claim 6, **characterized in that** a signal is transmitted continuously from the control device (18) to the loading vehicle (4), and the loading vehicle (4) detects the request signal if it receives less than a predetermined number of signals in a predetermined period of time.

8. The method according to claim 6 or 7, **characterized in that** the signal is a control signal transmitted from the control device (18) to the loading vehicle (4) in addition to at least one control signal.

9. A block storage arrangement having multiple container stacking chambers (2), a loading chamber (3) that is arranged below the container stacking chambers (2) and through which the container stacking chambers are accessible, a control device (18) and at least one loading vehicle (4), wherein the loading vehicle (4) has a travel drive, by means of which the loading vehicle (4) can be positioned below a container stacking chamber (2) preselected by the control device (18), and a lifting drive (6), by means of which a container (5) can be stored in the container stacking chamber (2) from below or can be removed downwards from the container stacking chamber (2), **characterized in that** the control device (18) is connected to a request device (21) with which a maintenance person can indicate a request for access and the control device (18), after actuation of the request device (21) and prior to the access of the maintenance person, places the block storage arrangement (1) into a secure state, with which the lifting drive (6) of the loading vehicle (4) is inactivated.

10. The block storage arrangement according to claim 9, **characterized in that** the control device (18) continuously sends signals to the loading vehicle (4) and the loading vehicle (4) detects a request signal if it does not receive a predetermined number of signals in a predetermined period of time, wherein the loading vehicle (4) switches to an inactive state after detecting the request signal.

11. The block storage arrangement according to claim 10, **characterized in that** the loading vehicle (4) has a first timer (19) that controls a first time interval after which the loading vehicle (4) switches to the inactive state, and the control device (18) has a second timer (20) that controls a second time interval after which the control device (18) generates the enable signal, wherein the second time interval is greater than the first time interval.

12. The block storage arrangement according to claim 10 or 11, **characterized in that** the loading vehicle inactivates itself after detecting the request signal.

13. The block storage arrangement according to any of the claims 10 to 12, **characterized in that** a maintenance chamber is arranged outside the loading chamber and the loading vehicle moves into the maintenance chamber after receiving the request signal.

## Revendications

1. Procédé de fonctionnement d'un agencement d'entreposage en blocs (1), qui comporte plusieurs espaces d'empilage de conteneurs (2), un espace de chargement (3) disposé en dessous des espaces d'empilage de conteneurs (2), un système de commande (18) et au moins un véhicule de chargement (4) déplaçable dans l'espace de chargement (3), sachant que le véhicule de chargement (4) comporte un mécanisme de translation, avec lequel le véhicule de chargement peut être positionné en dessous d'un espace d'empilage de conteneurs (2) présélectionné par le système de commande (18), et un mécanisme de levage (6), avec lequel un conteneur (5) peut être entreposé depuis le bas dans l'espace d'empilage de conteneurs (2) ou peut être prélevé vers le bas de l'espace d'empilage de conteneurs (2), **caractérisé en ce que** l'on déplace l'agencement d'entreposage en blocs (1) avant un accès d'une personne de maintenance dans un état sécurisé dans lequel on désactive le mécanisme de levage (6) du véhicule de chargement (4).

2. Procédé selon la revendication 1, **caractérisé en ce que** l'on règle le mécanisme de levage (6) du véhicule de chargement (4) dans une position inférieure en direction de la force de gravité et l'on arrête ensuite le mécanisme de levage (6).

3. Procédé selon la revendication 1 ou 2, **caractérisé en ce que** l'on désactive le véhicule de chargement (4) à la position à laquelle il se trouve.

4. Procédé selon la revendication 3, **caractérisé en ce que** l'on désactive le mécanisme de translation du véhicule de chargement (4) lors de la désactivation du véhicule de chargement (4).

5. Procédé selon l'une quelconque des revendications 1 à 4, **caractérisé en ce que** l'on évite l'accès de la personne de maintenance par une porte (7, 15), qui est fermée, sachant que pour ouvrir la porte (7, 15), un signal de déblocage doit être généré.

6. Procédé selon la revendication 5, **caractérisé en ce que** la personne de maintenance doit envoyer un signal de demande à l'agencement d'entreposage en blocs (1) pour générer le signal de déblocage et le signal de déblocage n'est généré qu'après un délai prédéterminé de production du signal de demande, sachant que le délai prédéterminé est plus long qu'un temps, que le véhicule de chargement (4) nécessite pour désactiver et le véhicule de chargement (4) identifie le signal de demande.

7. Procédé selon la revendication 6, **caractérisé en ce que** l'on transmet en continu un signal du système de commande (18) au véhicule de chargement (4) et le véhicule de chargement (4) identifie le signal de demande, lorsqu'il reçoit dans un délai prédéterminé moins d'un nombre prédéterminé de signaux.

8. Procédé selon la revendication 6 ou 7, **caractérisé en ce que** le signal est un signal de contrôle, que l'on transmet en plus à au moins un signal de commande par le système de commande (18) au véhicule de chargement (4) .

9. Agencement d'entreposage en blocs avec plusieurs espaces d'empilage de conteneurs (2), un espace de chargement (3) disposé en dessous des espaces d'empilage de conteneurs (2), à travers lequel les espaces d'empilage de conteneurs sont accessibles, un système de commande (18) et au moins un véhicule de chargement (4), sachant que le véhicule de chargement (4) comporte un mécanisme de translation, avec lequel le véhicule de chargement (4) peut être positionné en dessous d'un espace d'empilage de conteneurs (2) présélectionné par le système de commande (18) et un mécanisme de levage (6), avec lequel un conteneur (5) peut être entreposé depuis le bas dans l'espace d'empilage de conteneurs (2) ou peut être prélevé vers le bas de l'espace d'empilage de conteneurs (2), **caractérisé en ce que** le système de commande (18) est relié à un système de demande (21) avec lequel une personne de maintenance peut afficher un souhait d'accès et le système de commande (18) déplace l'agencement d'entreposage en blocs (1) après actionnement du système de demande (21) et avant l'accès de la personne de maintenance dans un état sécurisé pour lequel le mécanisme de levage (6) du véhicule de chargement (4) est désactivé.

10. Agencement d'entreposage en blocs selon la revendication 9, **caractérisé en ce que** le système de commande (18) envoie en continu des signaux au véhicule de chargement (4) et le véhicule de chargement (4) identifie un signal de demande, lorsqu'il ne reçoit pas dans un délai prédéterminé un nombre prédéterminé de signaux, sachant que le véhicule de chargement (4) bascule dans un état inactif après identification du signal de demande.

11. Agencement d'entreposage en blocs selon la revendication 10, **caractérisé en ce que** le véhicule de chargement (4) comporte un premier rythmeur (19), qui commande un premier intervalle de temps après lequel le véhicule de chargement (4) bascule dans l'état inactif et le système de commande (18) comporte un deuxième rythmeur (20), qui commande un deuxième intervalle de temps après lequel le système de commande (18) produit le signal de déblocage, sachant que le deuxième intervalle de temps est plus grand que le premier intervalle de temps.

12. Agencement d'entreposage en blocs selon la revendication 10 ou 11, **caractérisé en ce que** le véhicule de chargement se désactive automatiquement après identification du signal de demande.

13. Agencement d'entreposage en blocs selon l'une quelconque des revendications 10 à 12, **caractérisé en ce qu'**un espace de maintenance est disposé en dehors de l'espace de chargement et le véhicule de chargement se déplace dans l'espace de maintenance après réception du signal de demande.
